# FASCICULE DE BREVET EUROPEEN

(11) **EP 2 298 429 B1**
(45) Date de publication et mention de la délivrance du brevet: **04.03.2015**
(21) Numéro de dépôt: 10174711.1
(22) Date de dépôt: 31.08.2010
(51) Int. Cl.: B01D 29/01, B01D 29/66, E03B 3/02

(54) **Dispositif de filtration et installation de récupération des eaux pluviales équipées d'un tel dispositif**
Filtervorrichtung und Installation zur Regenwasseraufbereitung, die mit einer solchen Vorrichtung ausgestattet ist
Filtering device and installation for recovering rainwater provided with such a device

(30) Priorité: 31.08.2009 FR 0955927
(43) Date de publication de la demande: 23.03.2011
(73) Titulaire: Kipopluie, 33049 Bordeaux Cedex (FR)
(72) Inventeur: Roussel, Jacques-Albert, 33115 Pyla sur Mer (FR)
(74) Mandataire: Coquel, Jean-Marc

(56) Documents cités:
- EP-A1- 0 928 861
- DE-A1- 10 048 740
- DE-U1- 29 502 895
- DE-U1- 29 614 817
- FR-A1- 2 902 025

## Description

La présente invention concerne un dispositif de filtration notamment des eaux pluviales ou des eaux domestiques destinées à être recyclées. Elle concerne également une installation de récupération des eaux pluviales équipée d'au moins un tel dispositif.

Il est connu de placer à l'entrée d'une citerne de stockage des eaux pluviales, un filtre permettant d'éliminer des impuretés contenues dans celles-ci en vue du stockage de ces eaux.

Ces matières en suspension sont de dimensions variables. Il peut s'agir, par exemple, de feuilles, de brindilles ou encore de particules telles que des grains de sable.

Typiquement, les eaux pluviales sont collectées et acheminées par un conduit d'alimentation à l'entrée du filtre. Puis, elles passent au travers d'un élément filtrant placé à l'intérieur de ce filtre.

Les impuretés sont alors retenues sur la surface supérieure de cet élément filtrant. Un moyen d'accès latéral permet l'évacuation des impuretés ainsi collectées.

L'eau qui est passée au travers de cet élément filtrant, est alors récupérée et évacuée par un orifice de sortie du filtre vers un conduit d'évacuation relié à la citerne de stockage.

L'eau stockée dans la citerne peut dès lors soit être directement utilisée par exemple pour l'arrosage et pour l'usage des toilettes, soit retraitée de manière à garantir sa potabilité.

Le document EP 0 928 861 divulgue ainsi un filtre destiné à un écoulement d'eaux de pluie, composé d'une zone d'alimentation, d'une zone d'évacuation des eaux filtrées et d'une zone d'évacuation des eaux sales, où, entre la zone d'alimentation et la zone d'évacuation des eaux filtrées, est placée une chambre de tamisage équipée d'un tamis.

Le document DE 100 48 740 divulgue une méthode pour filtrer les eaux de pluie. Le dispositif comporte une entrée reliée à un filtre cylindre creux, un orifice de sortie des eaux de pluie non filtrée et un orifice de sortie des eaux de pluie filtrées. Un système de jet permet d'arroser le filtre pour l'entraîner en rotation et le nettoyer.

Les documents DE 296 14 817 U1 et DE 295 02 895 divulguent également des dispositifs de filtration des eaux de pluie.

Toutefois, on observe en cas de survenue de fortes pluies, une arrivée importante d'eau à l'entrée du filtre provoquant un trop plein qui ne permet pas de garantir la pureté de l'eau stockée dans la citerne et une montée en charge du réseau.

On peut constater de plus une stagnation des eaux de pluie dans le fond du filtre entre deux pluies, laquelle peut entraîner une infusion ou putréfaction des eaux stagnantes. Or, ces dernières peuvent ultérieurement être transportées par de nouvelles eaux de pluie filtrées vers la citerne, altérant ainsi la qualité de son contenu.

Le changement d'un filtre dans une installation de récupération des eaux pluviales préexistante peut, par ailleurs, nécessiter la mise en oeuvre de pièces supplémentaires pour connecter un nouveau filtre aux conduits d'alimentation et d'évacuation des eaux, les embouchures d'entrée et de sortie du filtre n'ayant pas nécessairement le même diamètre que celui de ces conduits.

Le montage d'un tel filtre est alors consommateur de temps pour l'opérateur. Il en résulte également des coûts additionnels car l'opérateur doit disposer en permanence de pièces intermédiaires telles que des réducteurs, pour assurer le montage de ce nouveau filtre.

On connaît également du document FR 2 902 025 A1, un élément de filtration conforme au préambule de la revendication 1, et destiné à équiper l'entrée d'une cuve de récupération d'eau de pluie. Cet élément de filtration comprend un corps étanche et un filtre tubulaire, ce corps étant pourvu de trois ouvertures munies chacune d'une embouchure de raccordement à un conduit.

Toutefois, les hauteurs d'eau nécessaires au transport de l'eau par gravité dans les filtres de l'état de l'art, requièrent un enfouissement important avec des contraintes humaines et mécaniques importantes.

Il serait donc important de répondre à ces divers inconvénients en proposant un foutre dont la conception originale permette de résoudre les problèmes techniques posés par les filtres de l'art antérieur.

L'objectif de la présente invention est donc de proposer un filtre qui soit simple dans sa conception et dans son mode opératoire, étanche et économique, permettant une filtration fiable des eaux de pluies, même en cas de pluies abondantes, sans stagnation des eaux.

Un autre objet de la présente invention est un filtre présentant une altimétrie de sortie des eaux filtrées qui est plus faible que celle de l'art antérieur, le filtre étant ainsi plus compact.

La présente invention vise encore un filtre dont les embouchures d'entrée, de sortie et d'évacuation des eaux filtrées peuvent être reliées à des conduites préexistantes sans nécessiter le raccordement de pièces intermédiaires.

A cet effet, l'invention concerne un dispositif de filtration comprenant un corps principal étanche et au moins un élément de filtration placé à l'intérieur de ce corps principal.

Selon l'invention, ledit au moins un élément de filtration est placé au-dessus d'une chambre de réception des eaux filtrées, le fond de cette chambre étant incliné et comportant un moyen de guidage des eaux filtrées ayant passé au travers dudit au moins un élément de filtration vers au moins un orifice de sortie de cette chambre pour évacuer ces eaux filtrées.

La configuration de la chambre empêche avantageusement toute stagnation des eaux car il n'existe aucun obstacle à l'écoulement naturel des eaux filtrées, ni aucune rétention. Il n'y a donc aucun risque de montée en charge.

De plus, ce dispositif de filtration par sa filtration laminaire autorise la percolation et le transport des débris vers l'exutoire, ou sortie d'eau non filtrée.

De manière plus générale, la présente invention concerne un dispositif de filtration comprenant un corps principal étanche et au moins un élément de filtration placé à l'intérieur de ce corps principal.

Selon l'invention, ledit au moins un élément de filtration est placé au-dessus d'au moins une chambre de réception des eaux filtrées comprenant un fond incliné, ladite au moins une chambre de réception comprenant au moins un orifice de sortie pour évacuer ces eaux filtrées. De plus, ledit corps principal est relié à une chambre réservoir par l'intermédiaire dudit au moins un orifice de sortie de ladite au moins une chambre de réception des eaux filtrées, ladite chambre réservoir comportant l'orifice principal de sortie des eaux filtrées du dispositif.

Dans différents modes de réalisation particuliers de ce dispositif de filtration, chacun ayant ses avantages particuliers et susceptibles de nombreuses combinaisons techniques possibles:
- ce dispositif de filtration comprend deux éléments de filtration espacés l'un de l'autre et placés chacun au-dessus d'une chambre de réception distincte des eaux filtrées, le fond de chacune de ces chambres étant incliné et comportant un moyen de guidage des eaux filtrées ayant passé au travers de l'élément de filtration correspondant vers au moins un orifice de sortie de ladite chambre pour évacuer ces eaux filtrées,
- ladite au moins une chambre de réception comportant un moyen de guidage des eaux filtrées ayant passé au travers dudit au moins un élément de filtration, le moyen de guidage comprend des saillies du fond formant des gorges de guidage des eaux filtrées,
- le corps principal du dispositif de filtration est relié à une chambre réservoir par l'intermédiaire dudit au moins un orifice de sortie de ladite au moins une chambre de réception des eaux filtrées, cette chambre réservoir comportant l'orifice principal de sortie des eaux filtrées du dispositif,
- le fond de cette chambre réservoir est incliné pour évacuer les eaux filtrées vers l'orifice principal de sortie,
- le corps principal du dispositif de filtration comprend des buses de nettoyage placées au moins au-dessus dudit au moins un élément de filtration pour nettoyer ledit au moins un élément de filtration,

Ces buses de nettoyage sont, de préférence, placées perpendiculairement audit au moins un élément de filtration.

Ces buses de nettoyage sont avantageusement reliées à un circuit d'alimentation en eau enterré, lequel est raccordable en surface à un simple tuyau d'arrosage. On obtient ainsi un nettoyage efficace et simple sans démontage du dispositif de filtration.
- la surface supérieure du corps principal comporte une portion de couvercle fermant une ouverture d'inspection et/ou d'insertion d'un filtre, cette portion de couvercle étant amovible,

Alternativement, cette portion de couvercle peut être ouvrable en étant reliée de manière pivotante au corps principal du dispositif de filtration.

La libération de l'ouverture d'inspection et/ou d'insertion d'un filtre permet avantageusement d'observer le degré d'usure du ou des éléments de filtration en vue de leur éventuel remplacement.
- la différence de hauteur entre l'extrémité inférieure de l'orifice principal de sortie du dispositif des eaux filtrées et l'extrémité inférieure de l'orifice d'entrée du dispositif est de 25 cm +/- 5%,

Cette faible différence de hauteur est particulièrement avantageuse en ce qu'elle permet un flux décalé vers le réceptacle des eaux filtrées, le ou les orifices de sortie des eaux filtrées étant placés perpendiculairement par rapport à l'axe de circulation des eaux non filtrées dans le dispositif. La gravité est préservée à la faveur des hauteurs de recouvrement.
- le dispositif comprend une entrée d'eau et deux sorties d'eau pour l'eau non filtrée par ledit au moins un élément de filtration, d'une part, et pour l'eau filtrée par l'élément de filtration, d'autre part, ladite entrée et lesdites sorties comportant chacune au moins deux éléments de raccordement accolés, lesdits éléments de raccordement étant de diamètres différents et en communication de fluide pour autoriser un branchement dudit dispositif sur des circuits de transport d'eau de différents diamètres.

Le dispositif de filtration de la présente invention est donc interopérable sur des réseaux VRD (voirie et réseaux divers) en différents diamètres tels que par exemple 200 et 400 mm, aussi bien en entrée avant filtration qu'en sortie vers le stockage ou vers l'exutoire. Le choix du diamètre peut se faire sur le chantier en sciant sur des lignes prédéfinies les éléments de raccordement, ou connexions, aux diamètres désirés.
- la chambre réservoir présente une hauteur supérieure à ladite au moins une chambre de réception des eaux filtrées,
- la chambre réservoir a une hauteur supérieure ou égale à la hauteur de l'orifice de sortie principal du dispositif de filtration,

Il résulte de ce qui précède que l'extrémité supérieure de la chambre réservoir peut être placée à n'importe quelle hauteur positive autorisant ainsi un déplacement vertical des eaux filtrées dans cette chambre réservoir.

Ainsi, en cas de survenue de pluies abondantes telles que des pluies dites décennales ou centennales, le dispositif de filtration permet avantageusement d'évacuer les eaux de pluie tout en conservant une percolation efficace de celles-ci sur ledit au moins un élément de filtration.

Cette chambre réservoir assure également un rattrapage altimétrique par rapport au fil d'eau de sortie des eaux filtrées.
- le dispositif comporte une entrée d'eau et une première sortie d'eau pour l'eau non filtrée placées chacune dans une paroi latérale distincte de ce corps principal tandis qu'une deuxième sortie d'eau pour l'eau filtrée est placée sur une paroi transversale à ces parois latérales de manière à définir une configuration triangulaire du dispositif de filtration,
- l'orifice principal de sortie à son extrémité inférieure placée au point le plus bas du fond de la chambre réservoir.

Le fil d'eau, ou point d'eau le plus bas de l'orifice principal de sortie du dispositif de filtration, est ainsi avantageusement placé au plus bas de ce dispositif de filtration afin d'autoriser une évacuation directe des eaux filtrées même en cas de faible débit.

L'invention concerne encore une installation de récupération des eaux pluviales comportant au moins un dispositif de filtration tel que décrit précédemment.

De préférence, cette installation comporte un récipient de grandes dimensions tel qu'une cuve, relié à un conduit d'alimentation en eau filtrée qui est solidaire de l'orifice de sortie des eaux filtrées du dispositif de filtration tel que décrit précédemment.

Cette installation peut comporter également un conduit d'évacuation de trop plein de manière à empêcher toute montée en charge. Ce conduit d'évacuation vient se relier à une paroi du corps principal du dispositif au-dessus du ou des éléments de filtration, cette paroi comportant une zone de rupture prédéterminée pour générer un orifice apte à recevoir l'extrémité de ce conduit d'évacuation.

Par ailleurs, il est possible de placer deux dispositifs de filtration en série pour récupérer les eaux filtrées de ces filtres vers un seul récipient de grandes dimensions tel qu'une cuve.

L'invention sera décrite plus en détail en référence aux dessins annexés dans lesquels:
- la figure 1 est une vue en perspective d'un dispositif de filtration selon un mode de réalisation particulier de l'invention;
- la figure 2 montre une vue en coupe du dispositif de filtration de la Fig. 1;

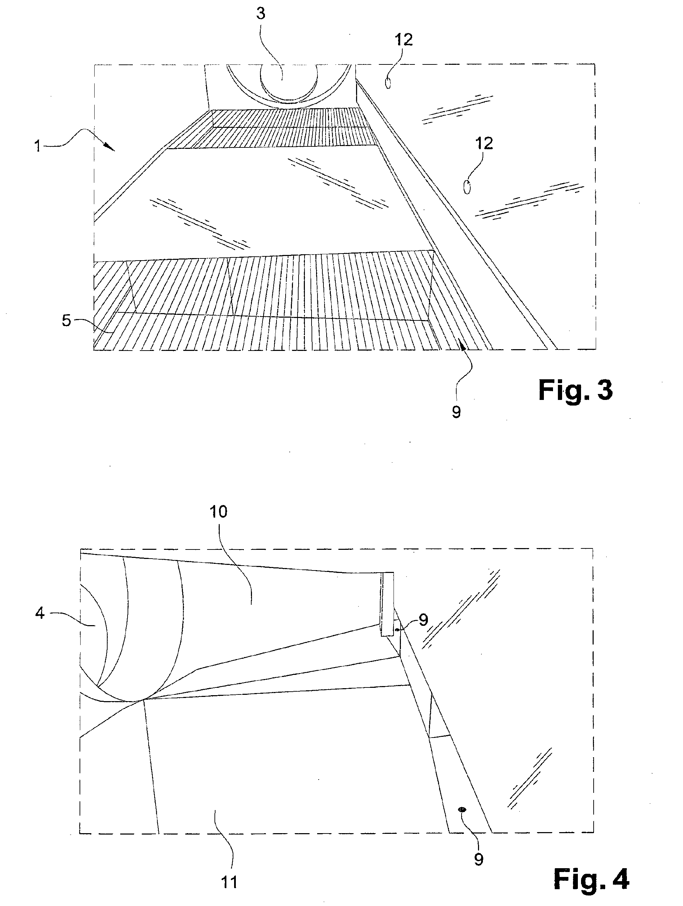

- la figure 3 montre schématiquement l'intérieur du corps principal du dispositif de la Fig. 1 vu depuis l'orifice d'entrée d'eau;
- la figure 4 est une vue élargie et partielle de l'intérieur de la chambre réservoir du dispositif de la Fig. 1 ;

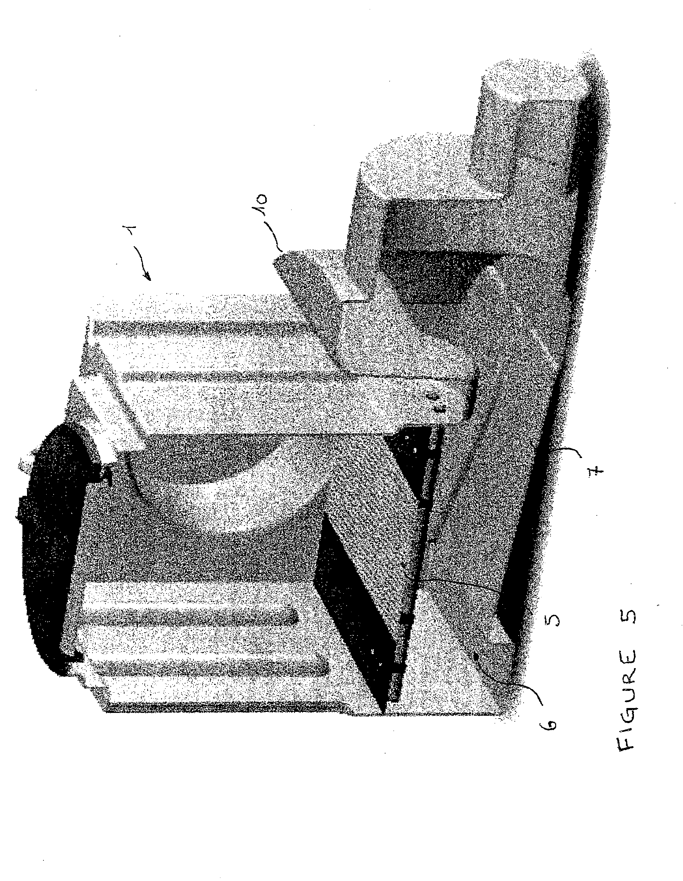

- la figure 5 montre une vue en coupe du dispositif de filtration de la Fig. 1;

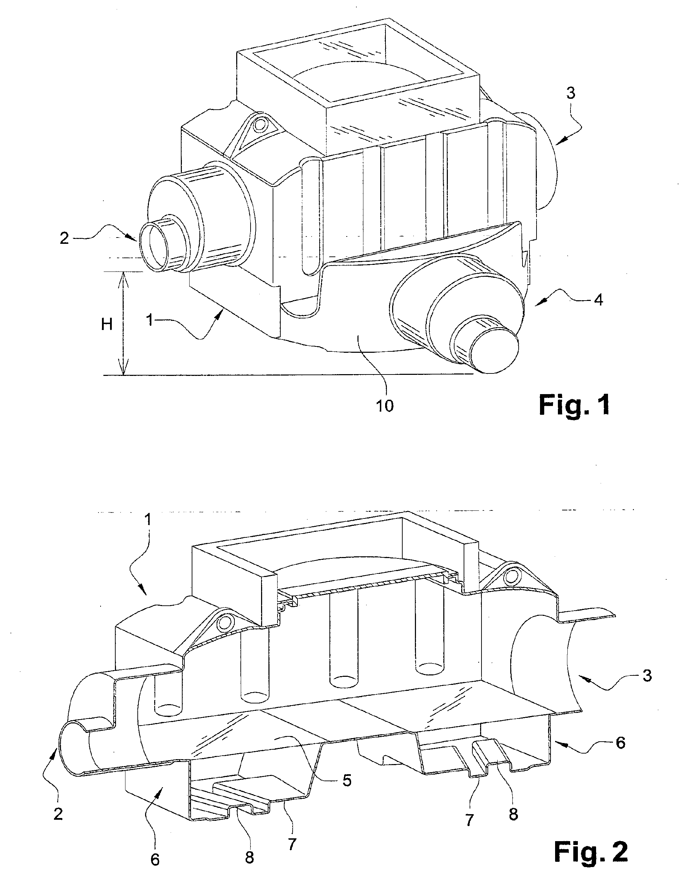

La Figure 1 est une vue en perspective d'un dispositif de filtration selon un mode de réalisation préféré de l'invention.

Le dispositif comporte un corps principal 1 étanche et monobloc, ce corps principal étant réalisé en matière plastique. A titre purement illustratif, la matière plastique pourra être notamment choisie dans le groupe comprenant le polyéthylène, et notamment le PE-HD ; le polyamide, et notamment le PA 6.6 ; le polypropylène ; l'acrylonitrile butadiène styrène (ABS) ; le polyester ou encore le PVC rigide.

Le dispositif comporte une entrée d'eau 2 et une première sortie d'eau 3, ou exutoire, pour l'eau non filtrée placées chacune dans une paroi latérale distincte de ce corps principal tandis qu'une deuxième sortie 4 d'eau pour l'eau filtrée est placée sur une paroi transversale à ces parois latérales. On définit ainsi une configuration triangulaire du dispositif de filtration. Une pente est ménagée entre l'entrée d'eau 2 et de la première sortie d'eau 3 pour permettre un écoulement naturel de l'eau par gravité. Cette pente est supérieure ou égale à 2%. Elle est typiquement de l'ordre de 2 à 3%.

Le dispositif de filtration comprend également deux éléments de filtration 5 placés à l'intérieur de ce corps principal 1. Ces éléments de filtration 5 sont espacés l'un de l'autre et placés chacun au-dessus d'une chambre de réception 6 des eaux filtrées.

Chaque élément de filtration 5 comprend ici un ensemble de grilles laminaires en inox disposées dans le sens de l'écoulement de l'eau. Ces éléments de filtration 5 sont ainsi incolmatables car les débris sont évacués naturellement par le débit des eaux non filtrées.

De manière plus générale, l'élément de filtration 5 a une surface de préférence plane, éventuellement légèrement incurvée. Il s'agit d'un tamis ou d'une grille dont les ouvertures sont inférieures à la taille des déchets courants, par exemple de l'ordre de 400 µm.

Ces chambres de réception 6 qui sont distinctes, sont donc placées dans la partie inférieure du corps principal 1 du dispositif. Le fond 7 de chacune de ces chambres est incliné pour garantir un écoulement naturel des eaux filtrées. De préférence, le fond 7 de chacune de ces chambres 6 est incliné vers le bas avec une pente supérieure ou égale à 2%. Cette pente est typiquement de préférence de 2 à 3%.

De plus, chaque fond 7 comporte un moyen de guidage 8 des eaux filtrées ayant passé au travers de l'élément de filtration 5 correspondant vers un orifice de sortie 9 de la chambre pour assurer un mouvement des eaux filtrées en vue de leur évacuation. Ce moyen de guidage 8 est ici formé par des saillies du fond formant des gorges de guidage des eaux filtrées. Chacune de ces saillies comporte avantageusement des bords arrondis pour faciliter l'évacuation des eaux filtrées.

Le corps principal 1 est relié au volume intérieur d'une chambre réservoir 10 par l'intermédiaire des orifices de sortie 9 des deux chambres de réception 6 des eaux filtrées. Cette chambre réservoir 10 comporte l'orifice principal de sortie 4 des eaux filtrées du dispositif.

La chambre réservoir 10 présente une hauteur supérieure aux chambres de réception 6 des eaux filtrées avec lesquelles elle est en communication de fluide, pour former une zone tampon en cas de pluies abondantes et éviter un trop plein des eaux filtrées.

Le fond 11 de cette chambre réservoir 10 est également incliné pour faciliter l'évacuation des eaux filtrées vers l'orifice principal de sortie 4. Elle présente également une forme demi-cylindrique pour guider les eaux ainsi filtrées vers cet orifice principal 4 de sortie des eaux filtrées.

La hauteur d'eau H du filtre entre le file d'eau d'entrée 2 et le file d'eau de sortie 4 par un jeu de chevauchement sur la hauteur des sorties, permet d'obtenir ici une hauteur de 24 cm, ce qui induit un recouvrement moindre sur la citerne enterrée et le rattrapage de la pente par rapport à l'évacuation finale de l'installation de récupération des eaux pluviales. Cette faible hauteur d'eau H du dispositif de filtration autorise avantageusement un terrassement moins important, et par conséquent, facilite le raccord de l'installation de récupération des eaux pluviales à l'évacuation finale.

Le corps principal 1 comporte des buses de nettoyage 12 placées au-dessus et perpendiculairement aux éléments de filtration 5. Le raccord final du circuit d'alimentation (non représenté) alimentant des buses 12 en eau est de préférence adaptable à un tuyau d'arrosage.

L'utilisateur peut ainsi procéder au nettoyage du dispositif de filtration sur programmateur ou en déclenchement manuel.

## Revendications

1. Dispositif de filtration comprenant un corps principal (1) étanche et au moins un élément de filtration (5) placé à l'intérieur dudit corps, ledit au moins un élément de filtration (5) étant placé au-dessus d'au moins une chambre de réception (6) des eaux filtrées comprenant un fond (7) incliné, ladite au moins une chambre de réception (6) comprenant au moins un orifice de sortie (9) pour évacuer ces eaux filtrées, ledit corps principal (1) étant relié à une chambre réservoir (10) par l'intermédiaire dudit au moins un orifice de sortie (9) de ladite au moins une chambre de réception (6) des eaux filtrées, ladite chambre réservoir (10) comportant l'orifice principal (4) de sortie des eaux filtrées du dispositif, **caractérisé en ce que**
- le corps principal du dispositif de filtration et la chambre réservoir sont d'un seul tenant et de matière, et
- l'extrémité supérieure de la chambre réservoir (10) présente une hauteur supérieure à ladite au moins une chambre de réception (6) des eaux filtrées et supérieure ou égale à la hauteur de l'orifice de sortie (4) principal du dispositif de filtration pour définir une zone tampon en cas de pluies abondantes.

2. Dispositif selon la revendication 1, **caractérisé en ce que** ledit dispositif comprend deux éléments de filtration (5) espacés l'un de l'autre et placés chacun au-dessus d'une chambre de réception (6) distincte des eaux filtrées, le fond (7) de chacune de ces chambres étant incliné et comportant un moyen de guidage (8) des eaux filtrées ayant passé au travers de élément de filtration (5) correspondant vers au moins un orifice de sortie (9) de ladite chambre pour évacuer ces eaux filtrées.

3. Dispositif selon la revendication 1 ou 2, **caractérisé en ce que** ladite au moins une chambre de réception (6) comportant un moyen de guidage (8) des eaux filtrées ayant passé au travers dudit au moins un élément de filtration (5), ledit moyen de guidage (8) comprend des saillies dudit fond (7) formant des gorges de guidage des eaux filtrées.

4. Dispositif selon la revendication 3, **caractérisé en ce que** chacune desdites saillies (8) comporte des bords arrondis pour faciliter l'évacuation des eaux filtrées.

5. Dispositif selon l'une quelconque des revendications 1 à 4, caractérisé le fond (11) de ladite chambre reservoir (10) est incliné pour évacuer les eaux filtrées vers ledit orifice principal de sortie (4).

6. Dispositif selon la revendication 5, **caractérisé en ce que** ladite chambre réservoir (10) présente une forme demi cylindrique pour guider les eaux ainsi filtrés vers ledit orifice principal de sortie des eaux filtrées.

7. Dispositif selon l'une quelconque des revendications 1 à 6, **caractérisé en ce que** la différence de hauteur entre l'extrémité inférieure de l'orifice principal de sortie (4) du dispositif des eaux filtrées et l'extrémité inférieure de l'orifice d'entrée (2) du dispositif est de 25 cm +/- 5%.

8. Dispositif selon l'une quelconque des revendications 1 à 7, **caractérisé en ce qu'**il comprend une entrée d'eau (2) et deux sorties d'eau (3, 4) pour l'eau non filtrée par ledit au moins un élément de filtration (5), d'une part, et pour l'eau filtrée par l'élément de filtration (5), d'autre part, ladite entrée et lesdites sorties comportant chacune au moins deux éléments de raccordement accolés, lesdites éléments de raccordement étant de diamètres différents et en communication de fluide pour autoriser un branchement dudit dispositif sur des circuits de transport d'eau de différents diamètres.

9. Dispositif selon l'une quelconque des revendications 1 à 8, **caractérisé en ce que** le corps principal (1) dudit dispositif comprend des buses de nettoyage (12) placées au moins au-dessus dudit au moins un élément de filtration (5) pour nettoyer ledit au moins un élément de filtration.

10. Dispositif selon l'une quelconque des revendications 1 à 9, **caractérisé en ce que** la surface supérieure dudit corps principal (1) comporte une portion de couvercle fermant une ouverture d'inspection et/ou d'insertion d'un filtre, ladite portion de couvercle étant amovible.

11. Dispositif selon l'une quelconque des revendications 1 à 10, **caractérisé en ce que** le dispositif comporte une entrée d'eau (2) et une première sortie d'eau (3) pour l'eau non filtrée placées chacune dans une paroi latérale distincte de ce corps principal tandis qu'une deuxième sortie d'eau (4) pour l'eau filtrée est placée sur une paroi transversale à ces parois latérales de manière à définir une configuration triangulaire du dispositif de filtration.

12. Dispositif selon l'une quelconque des revendications 1 à 11, **caractérisé en ce que** l'orifice principal (4) de sortie à son extrémité inférieure placée au point le plus bas du fond de la chambre réservoir (10).

13. Installation de récupération des eaux pluviales comportant au moins un dispositif de filtration selon l'une quelconque des revendications 1 à 12.

## Patentansprüche

1. Filtrierungsvorrichtung, die einen dichten Hauptkörper (1) und wenigstens ein innerhalb des Körpers angeordnetes Filtrierungselement (5) umfasst, wobei das wenigstens eine Filtrierungselement (5) über wenigstens einer Kammer (6) für die Aufnahme von gefiltertem Wasser angeordnet ist, die einen geneigten Boden (7) aufweist, wobei die wenigstens eine Aufnahmekammer (6) wenigstens eine Auslassöffnung (9) aufweist, um dieses gefilterte Wasser zu entleeren, wobei der Hauptkörper (1) über die wenigstens eine Auslassöffnung (9) der wenigstens einen Kammer (6) für die Aufnahme des gefilterten Wassers mit einer Vorratskammer (10) verbunden ist, wobei die Vorratskammer (10) die Hauptauslassöffnung (4) für gefiltertes Wasser der Vorrichtung aufweist, **dadurch gekennzeichnet, dass**
- der Hauptkörper der Filtrierungsvorrichtung und die Vorratskammer einteilig aus demselben Material gebildet sind und
- das obere Ende der Vorratskammer (10) eine Höhe aufweist, die größer als jene der wenigstens einen Kammer (6) für die Aufnahme des gefilterten Wassers und größer oder gleich der Höhe der Hauptauslassöffnung (4) der Filtrierungsvorrichtung ist, um eine Pufferzone bei ergiebigem Regen zu definieren.

2. Vorrichtung nach Anspruch 1, **dadurch gekennzeichnet, dass** die Vorrichtung zwei Filtrierungselemente (5) umfasst, die voneinander beabstandet sind und jeweils über einer anderen Kammer (6) für die Aufnahme von gefiltertem Wasser angeordnet sind, wobei der Boden (7) jeder dieser Kammern geneigt ist und ein Mittel (8) zum Führen des gefilterten Wassers, das sich durch das entsprechende Filtrierungselement (5) bewegt hat, zu wenigstens einer Auslassöffnung (9) der Kammer, um dieses gefilterte Wasser zu entleeren, umfasst.

3. Vorrichtung nach Anspruch 1 oder 2, **dadurch gekennzeichnet, dass** die wenigstens eine Aufnahmekammer (6) ein Mittel (8) zum Führen des gefilterten Wassers, das sich durch das wenigstens eine Filtrierungselement (5) bewegt hat, umfasst, wobei das Führungsmittel (8) Vorsprünge von dem Boden (7) aufweist, die Nuten zum Führen des gefilterten Wassers bilden.

4. Vorrichtung nach Anspruch 3, **dadurch gekennzeichnet, dass** jeder der Vorsprünge (8) abgerundete Kanten aufweist, um die Entleerung des gefilterten Wassers zu erleichtern.

5. Vorrichtung nach einem der Ansprüche 1 bis 4, **dadurch gekennzeichnet, dass** der Boden (11) der Vorratskammer (10) geneigt ist, um das gefilterte Wasser zu der Hauptauslassöffnung (4) zu entleeren.

6. Vorrichtung nach Anspruch 5, **dadurch gekennzeichnet, dass** die Vorratskammer (10) eine halbzylindrische Form aufweist, um das somit gefilterte Wasser zu der Hauptauslassöffnung für gefiltertes Wasser zu führen.

7. Vorrichtung nach einem der Ansprüche 1 bis 6, **dadurch gekennzeichnet, dass** die Höhendifferenz zwischen dem unteren Ende der Hauptauslassöffnung (4) der Vorrichtung für gefiltertes Wasser und dem unteren Ende der Einlassöffnung (2) der Vorrichtung 25 cm ± 5 % beträgt.

8. Vorrichtung nach einem der Ansprüche 1 bis 7, **dadurch gekennzeichnet, dass** sie einen Wassereinlass (2) und zwei Wasserauslässe (3, 4) für nicht durch das wenigstens eine Filtrierungselement (5) gefiltertes Wasser einerseits und für durch das Filtrierungselement (5) gefiltertes Wasser andererseits umfasst, wobei der Einlass und die Auslässe jeweils wenigstens zwei zusammengeklebte Verbindungselemente umfassen, wobei die Verbindungselemente unterschiedliche Durchmesser haben und in einer Fluidkommunikation stehen, um eine Verzweigung der Vorrichtung auf Wassertransportkreise mit unterschiedlichen Durchmessern zuzulassen.

9. Vorrichtung nach einem der Ansprüche 1 bis 8, **dadurch gekennzeichnet, dass** der Hauptkörper (1) der Vorrichtung Reinigungsdüsen (12) umfasst, die wenigstens über dem wenigstens einen Filtrierungselement (5) angeordnet sind, um das wenigstens eine Filtrierungselement zu reinigen.

10. Vorrichtung nach einem der Ansprüche 1 bis 9, **dadurch gekennzeichnet, dass** die obere Oberfläche des Hauptkörpers (1) einen Deckelabschnitt aufweist, der eine Öffnung zum Untersuchen und/oder Einsetzen eines Filters verschließt, wobei der Deckelabschnitt abnehmbar ist.

11. Vorrichtung nach einem der Ansprüche 1 bis 10, **dadurch gekennzeichnet, dass** die Vorrichtung einen Wassereinlass (2) und einen ersten Wasserauslass (3) für nicht gefiltertes Wasser, die jeweils in einer anderen Seitenwand des Hauptkörpers angeordnet sind, aufweist, während ein zweiter Wasserauslass für gefiltertes Wasser in einer Wand quer zu diesen Seitenwänden angeordnet ist, derart, dass eine dreieckige Konfiguration der Filtrierungsvorrichtung definiert ist.

12. Vorrichtung nach einem der Ansprüche 1 bis 11, **dadurch gekennzeichnet, dass** die Hauptauslassöffnung (4) mit ihrem unteren Ende an dem tiefsten Punkt des Bodens der Vorratskammer (10) angeordnet ist.

13. Anlage zum Wiedergewinnen von Regenwasser, die wenigstens eine Filtrierungsvorrichtung nach einem der Ansprüche 1 bis 12 umfasst.

## Claims

1. Filtration device comprising a sealed main body (1) and at least one filtration element (5) placed inside said body, said at least one filtration element (5) being placed above at least one chamber (6) for receiving the filtered water comprising an inclined bottom (7), said at least one receiving chamber (6) comprising at least one outlet opening (9) for evacuating this filtered water, said main body (1) being connected to a reservoir chamber (10) via said at least one outlet opening (9) of said at least one chamber (6) for receiving the filtered water, said reservoir chamber (10) comprising the main outlet opening (4) for the filtered water from the device, **characterized in that**
- the main body of the filtration device and the reservoir chamber are produced integrally and in one piece, and
- the height of the upper end of the reservoir chamber (10) is greater than that of said at least one chamber (6) for receiving the filtered water and greater than or equal to the height of the main outlet opening (4) of the filtration device so as to define a buffer zone in case of heavy rain.

2. Device according to Claim 1, **characterized in that** said device comprises two filtration elements (5) spaced apart from one another and each placed above a different chamber (6) for receiving the filtered water, the bottom (7) of each of these chambers being inclined and comprising a means (8) for guiding the filtered water, which has passed through the corresponding filtration element (5), towards at least one outlet opening (9) of said chamber for evacuating this filtered water.

3. Device according to Claim 1 or 2, **characterized in that** with said at least one receiving chamber (6) comprising a means (8) for guiding the filtered water, which has passed through said at least one filtration element (5), said guiding means (8) comprises projections from said bottom (7) forming channels for guiding the filtered water.

4. Device according to Claim 3, **characterized in that** each of said projections (8) comprises rounded edges so as to facilitate the evacuation of the filtered water.

5. Device according to any one of Claims 1 to 4, **characterized in that** the bottom (11) of said reservoir chamber (10) is inclined so as to evacuate the filtered water towards said main outlet opening (4).

6. Device according to Claim 5, **characterized in that** said reservoir chamber (10) is semi-cylindrical in shape in order to guide the water filtered in this manner towards said main outlet opening for the filtered water.

7. Device according to any one of Claims 1 to 6, **characterized in that** the height difference between the lower end of the main outlet opening (4) of the device for the filtered water and the lower end of the inlet opening (2) of the device is 25 cm +/-5%.

8. Device according to any one of Claims 1 to 7, **characterized in that** it comprises, on one hand, a water inlet (2) and two water outlets (3, 4) for the water not filtered by said at least one filtration element (5) and, on the other hand, for the water filtered by the filtration element (5), said inlet and said outlets each comprise at least two side-by-side connection elements, said connection elements being of different diameters and fluidically connected so as to allow said device to be connected to water transportation circuits of different diameters.

9. Device according to any one of Claims 1 to 8, **characterized in that** the main body (1) of said device comprises cleaning nozzles (12) placed at least above said at least one filtration element (5) in order to clean said at least one filtration element.

10. Device according to any one of Claims 1 to 9, **characterized in that** the upper surface of said main body (1) comprises a lid portion which closes an opening for inspecting and/or for inserting a filter, said lid portion being removable.

11. Device according to any one of Claims 1 to 10, **characterized in that** the device comprises a water inlet (2) and a first water outlet (3) for the unfiltered water, which are each placed in a different side wall of this main body while a second water outlet (4) for the filtered water is placed on a wall transverse to these side walls so as to define a triangular configuration of the filtration device.

12. Device according to any one of Claims 1 to 11, **characterized in that** the lower end of the main outlet opening (4) is placed at the lowest point of the bottom of the reservoir chamber (10).

13. Installation for recovering rainwater, comprising at least one filtration device according to any one of Claims 1 to 12.
